Europäisches Patentamt

European Patent Office

Office européen des brevets

(11) Veröffentlichungsnummer: **0 319 600**
**A1**

(12) **EUROPÄISCHE PATENTANMELDUNG**

(21) Anmeldenummer: 87118098.0

(22) Anmeldetag: 08.12.87

(51) Int. Cl.4: **F21V 25/00 , G03B 15/03**

(43) Veröffentlichungstag der Anmeldung:
**14.06.89 Patentblatt 89/24**

(84) Benannte Vertragsstaaten:
**AT BE CH DE ES FR GB GR IT LI LU NL SE**

(71) Anmelder: **REFLECTA GMBH FOTO FILM PROJEKTION**
**Berlichingenstrasse 9**
**D-8540 Schwabach(DE)**

(72) Erfinder: **Der Erfinder hat auf seine Nennung verzichtet**

(74) Vertreter: **LOUIS, PÖHLAU, LOHRENTZ & SEGETH**
**Kesslerplatz 1 Postfach 3055**
**D-8500 Nürnberg(DE)**

(54) **Filmleuchte.**

(57) Die erfindungsgemäße Filmleuchte weist zwei versetzt nebeneinander liegende Reihen parallel zueinander angeordneter lichtdurchlässiger Rohrkörper (24) auf, die konzentrisch um den Brenner (18) angeordnet sind und sowohl zwischen Reflektor (22) und Brenner (18) als auch im Bereich der Gehäuseöffnung der Filmleuchte verlaufen. Dadurch wird ein weiches Licht erzielt und kann auf Korbrahmen und Panzerglas verzichtet werden.

EP 0 319 600 A1

## Filmleuchte

Die Erfindung betrifft eine Filmleuchte mit einem Gehäuse, in dem ein Reflektor angeordnet ist, der mit einem Brenner zusammenwirkt, und das eine Öffnung für den Durchgang von Licht und Wärme aufweist, die zur Verhinderung von Verletzungen bei einer Brennerexplosion mit einer Schutzeinrichtung versehen ist.

Bei den bekannten Filmleuchten ist unter Zwischenschaltung eines Korbrahmens die Gehäuseöffnung mit einem Panzerglas abgedeckt. Das Panzerglas läßt das Licht der Filmleuchte hindurchtreten und schützt vor Splittern, die bei der Explosion des Brenners entstehen. Der Korbrahmen, der zwischen dem Gehäuse und dem Panzerglas vorgesehen ist, dient in erster Linie zur Wärmeabfuhr.

Derartige Filmleuchten haben mehrere Nachteile. Ein Nachteil ist, daß das durch den Korbrahmen dringende Streulicht oftmals stört. Ein weiterer Nachteil besteht darin, daß durch den geringen wirksamen Querschnitt des Korbrahmens relativ viel Wärme abgeführt werden muß, was beim Hantieren der Leuchte sich als unangenehm erweist. Dieser Nachteil gilt besonsers bei Leuchten, die mit einem Ventilator ausgerüstet sind, der dafür sorgt, daß durch den geringen wirksamen Querschnitt des Korbrahmens viel Luft zur Kühlung des Brenners bewegt wird. Der Haupnachteil bei den bekannten Filmleuchten ist aber darin zu sehen, daß diese im Betrieb blenden, so daß im Aufnahmebetrieb mit einer Filmkamera oder einer Videokamera die gefilmten Personen es tunlichst vermeiden, in Richtung Filmleuchte zu blicken. Es gelingt nicht, das vom Reflektor oder dem Brenner direkt ausgehende Licht soweit zu streuen, daß die Blendung erträglich wird.

Der Erfindung liegt daher die Aufgabe zugrunde, eine Filmleuchte der eingangs genannten Art derart auszubilden, daß die von ihr ausgehende Blendung auf ein erträgliches Maß reduziert wird.

Diese Aufgabe wird erfindungsgemäß dadurch gelöst, daß die Schutzeinrichtung von mindestens zwei versetzt nebeneinander liegenden Reihen parallel zueinander angeordneter lichtdurchlässiger Rohrkörper gebildet wird, die jeden vom Brenner ausgehenden Lichtstrahl mindestens einmal ablenken.

Beim Erfindungsgegenstand werden die vom Brenner ausgehenden Lichtstrahlen durch Reflexion und/oder Brechung an den lichtdurchlässigen Rohrkörpern gewöhnlich mehrmals abgelenkt, wodurch die Blendung auf ein erträgliches Maß herabgesetzt wird. Das Licht wird nach der Erfindung weicher, ohne daß ein Lichtverlust hingenommen werden muß. Gleichzeitig ist sichergestellt, daß ein Schutz gegen austretende Splitter erzielt wird, die bei einer Brennerexplosion erzeugt werden, da die Splitter ebensowenig wie die Lichtstrahlen nicht geradlinig durch die zwei Reihen von Rohrkörpern hindurchtreten können. Der Abstand der Rohrkörper voneinander wird dabei zweckmäßigerweise so gewählt, daß die VDE-Norm erfüllt wird, vorzugsweise 1 mm (die VDE-Norm fordert 2,4 mm). Von ganz großem Vor·teil erweist sich aber bei der erfindungsgemäßen Filmleuchte die aufgrund der großen wirksamen Oberfläche der Rohrkörperreihen sich ergebende hohe Wärmeabfuhr, so daß selbst bei leistungsstarken Leuchten (bspw. 300 Watt) auf Ventilatoren verzichtet werden kann. Der Verzicht auf einen Ventilator hat nicht nur zur Folge, daß die Leuchte handlicher und billiger wird, sondern auch im Betrieb vollkommen geräuschfrei ist, was besonders im Hinblick auf die heute immer mehr verbreiteten Videokameras von Bedeutung ist, bei denen gleichzeitig der Ton mit aufgezeichnet wird.

Zweckmäßigerweise verläuft die Achse der Rohrkörper parallel zur Brennerachse.

Um die Blendung weiter herabzusetzen, werden in einer bevorzugten Ausführungsform der Erfindung die Reihen lichtdurchlässiger Rohrkörper auch zwischen Brenner und Reflektor vorgesehen. In dieser Ausführungsform sind das Licht diffus machende Rohrkörper wirksam, bevor das Licht auf den Reflektor trifft, dann die gleichen Rohrkörper wiederum wirksam, wenn das Licht den Reflektor verläßt und schließlich andere rohrförmige Körper in der Gehäuseöffnung, die das vom Reflektor ausgehende Licht nochmals beim Austritt aus der Filmleuchte diffus machen. Auf diese Weise läßt sich ein extrem weiches Licht auch bei glatter spiegelnder Oberfläche des Reflektors erzielen.

In einer weiteren Ausbildung der Erfindung ist zumindesst ein Teil der Rohrkörper hohl und ist zumindest in einem Teil der hohlen Rohrkörper je eine Lamelle angeordnet.

Dabei sind vorzugsweise in den hohlen Rohrkörpern, die sich zwischen Reflektor und Brenner befinden, die Lamellen drehbar zwischen einer Stellung, in der ihre Ebene senkrecht zur Reflektoroberfläche bzw. radial zum Brenner ausgerichtet ist, und einer Stellung, in der ihre Ebene parallel zur Reflektoroberfläche ausgerichtet ist. Auf diese Weise kann man den Einfluß des Reflektors auf das von der Filmleuchte abgegebene Licht steuern. In der Stellung, in der die Ebene der Lamellen radial zum Brenner ausgerichtet ist, ist der Reflektor vol wirksam, während in der Stellung, in der die Ebene der Lamellen parallel zur Reflektoroberfläche ausgerichtet ist, der Reflektor unwirksam ist und die Qualität des Lichtes von der Oberflächenbeschaffenheit dr Lamellen abhängt. Diese können bspw. mit einem weißen Lack überzogen sein, der zwar zur Folge hat, daß die Lichtausbeute der Filmleuchte bei Wirksamwerden der Lamellen geringer wird, mit dem jedoch das Licht sehr weich gemacht werden kann.

Bei einer solchen Ausführungsform weisen Vorder- und Rückseite der drehbaren Lamellen vorzugsweise unterschiedlich reflektierende Oberflächen auf, so daß sich drei Einstellungen für das aus der Filmleuchte austretende Licht ergeben.

Unabhängig davon, ob drehbare Lamellen in den Rohrkörpern zwischen Reflektor und Brenner vorgesehen sind, können als weiterer Blendschutz radial zum Brenner ausgerichtete Lamellen in hohlen Rohrkörpern, vorzugsweise der äußeren Reihe, im Bereich der Gehäuseöffnung feststehend angeordnet sein.

Alternativ zu dieser Ausführungsform oder in Verbindung mit einer solchen können außerdem als weiterer Blenschutz radial zum Brenner ausgerichtete Lamellen zwischen den Rohrkörpern, vorzugsweise der äußeren Reihe im Bereich der Gehäuseöffnung feststehend angeordnet sein.

Zweckmäßigerweise werden die Rohrkörper einen kresiförmigen Querschnitt aufweisen. Dann wird nicht nur eine gute Führung evtl. in hohlen Rohrkörpern drehbarer Lamellen erzielt sondern auch vermieden, daß bei der Streuung des Lichtes durch die Rohrkörper Richtungen bevorzugt werden. In diesem Zusammenhang sei betont, daß auch in der einfachsten Ausführungsform mit dem Erfindungsgegenstand ein streifenfreies Licht erzielt werden kann.

Als optimal wird eine Ausführungsform angesehen, für die die Rohrkörper und der Reflektor konzentrisch zum Brenner angeordnet sind.

Schließlich lassen sich vorteilhafterweise die im Bereich der Gehäuseöffnung befindlichen Rohrkörper um eine gemeinsame Schwenkachse am Gehäuse für einen Brennerwechsel wegklappen.

Die Erfindung wird nun anhand der beiliegenden Zeichnung und an einem bevorzugten Ausführungsbeispiel näher erläutert. In der Zeichnung stellen dar:

Fig. 1 eine Vorderansicht der erfindungsgemäßen Leuchte,

Fig. 2 eine Seitenansicht der erfindungsgemäßen Leuchte mit einer zusätzlichen Abdeckung an der Gehäuseöffnung,

Fig. 3 eine Ansicht der erfindungsgemäßen Leuchte von der entgegengesetzten Seite mit weggeklappter Schutzeinrichtung, um einen Brennerwechsel zu gestatten,

Fig. 4 eine Rückansicht der erfindungsgemäßen Leuchte,

Fig. 5a bis 5c Querschnittsansichten der erfindungsgemäßen Filmleuchte ohne Fuß in drei verschiedenen Stellungen der Lamellen im Bereich zwischen Reflektor und Brenner,

Fig. 6 die Einrichtung zum Verstellen der Lamellen,

Fig. 7 eine Querschnittsansicht der erfindungsgemäßen Filmleuchte ohne Fuß mit Lamellen im Bereich der Gehäuseöffnung und

Fig. 8 eine Querschnittsansicht der erfindungsgemäßen Filmleuchte ohne Fuß, bei der anstelle der in den Fig. 5a bis 5c gezeigten Lamellen ein anderer Füllkörper in die Rohrkörper eingesetzt wird.

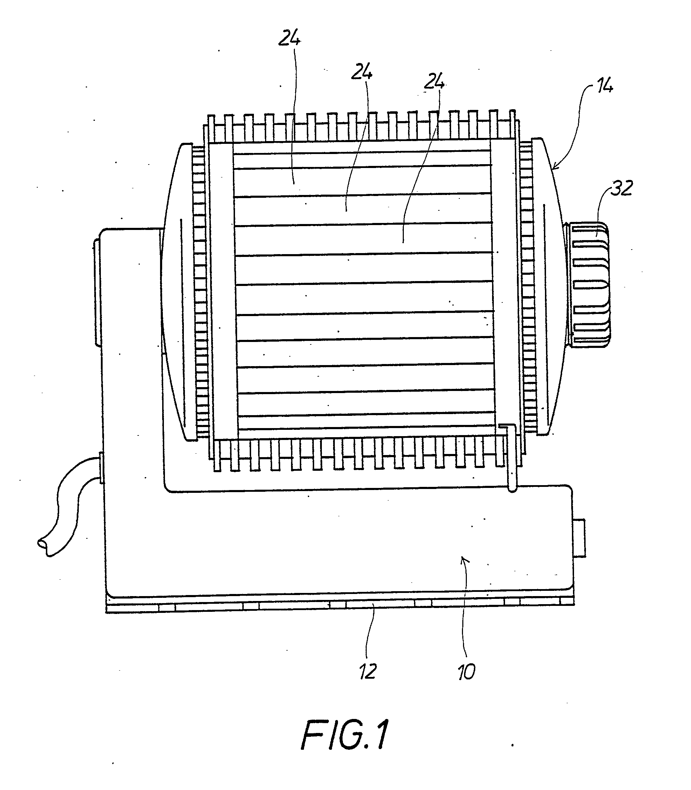

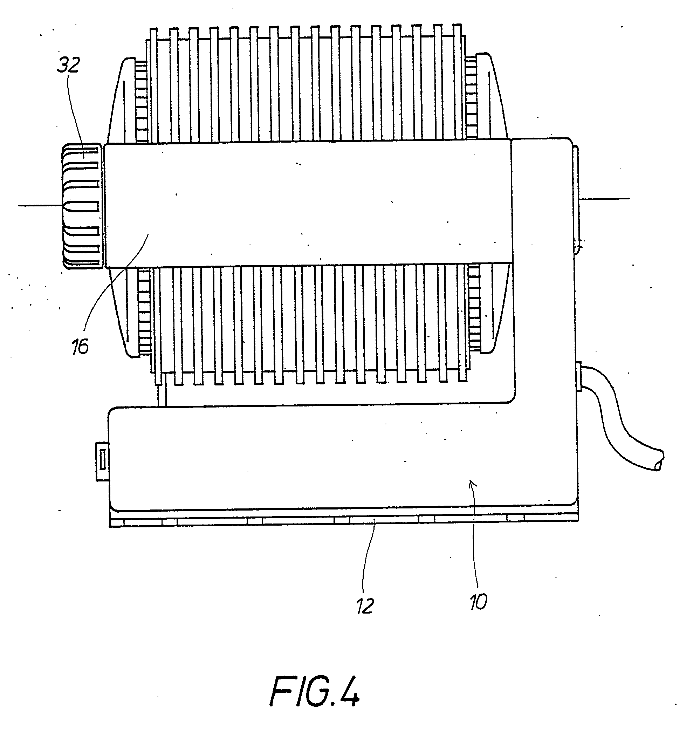

Die erfindungsgemäße Filmleuchte ist sehr kompakt und leicht, da sie auch bei hoher Lichtleistung keinen Ventilator benötigt. Die gesamte elektrische Einrichtung ist in einem Fuß 10 der Filmleuchte untergebracht, der mit einem T-Stück 12 in einen nicht gezeigten Schuh einer Kamera einsteckbar ist. Der Fuß 10 hat eine langgestreckte Form, und der Hauptkörper 14 der Filmleuchte, der die Form eines Zylinders hat, liegt wie in Fig. 1 gezeigt, parallel zum großen Schenkel des L-förmigen Fußes 10, an dessen kurzem Schenkel der Hauptkörper, wie es Fig. 1 zeigt, befestigt ist. Bei dem kurzen Schenkel des L-förmigen Fußes 10 der Filmleuchte ist, wie es aus Fig. 4 hervorgeht, ein Bügel 16 befestigt, der bis zu dem freien Ende des zylindrischen Hauptkörpers 14 der Filmleuchte sich erstreckt, so daß die Achse des zylindrischen Hauptkörpers der Filmleuchte den Bügel 16 an seinen beiden Enden durchstößt.

Entlang dieser Achse des Hauptkörpers erstreckt sich ein Brenner 18. Konzentrisch zum Brenner 18 liegt das im Querschnitt halbkreisförmige Gehäuse 20 der Filmleuchte bzw. des Hauptkörpers, das auf seiner Innenseite den Reflektor 22 aufweist. Um den Brenner 18 sind ferner zwei versetzt nebeneinander liegende Reihen hohlzylindrischer Rohrkörper 24 aus Sicherheitsglas konzentrisch zur Achse des Brenners angeordnet, wie dies in der Zeichnung deutlich dargestellt ist. Die Anordnung ist dabei derart getroffen, daß in der Vorderansicht der Filmleuchte (sh. Fig. 1) die Rohrkörper sich lückenlos überlappen, so daß der Brenner nicht sichtbar ist.

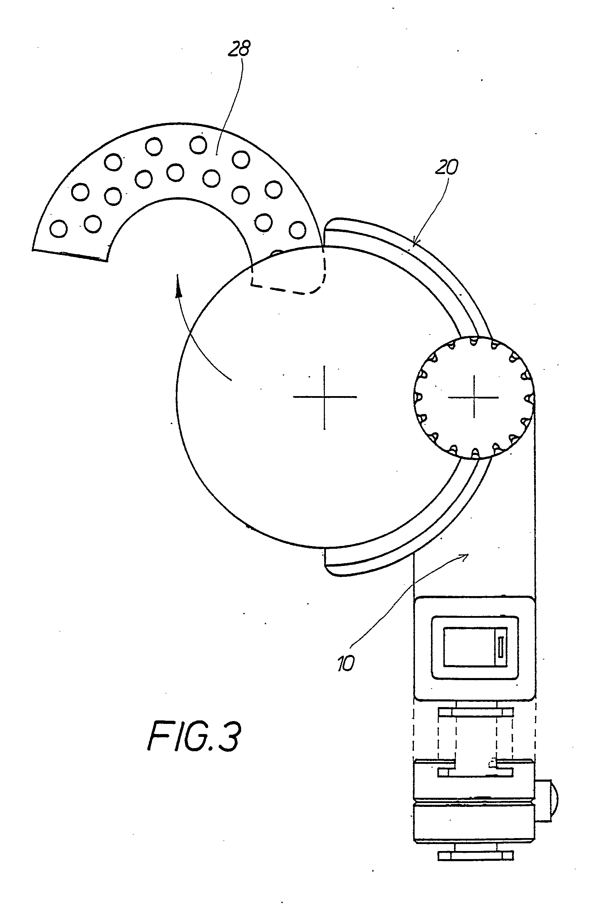

Die Rohrkörper 24 sind an ihren axialen Enden an halbkreisförmigen Haltern 26 und 28 befestigt, die an den Stirnseiten des Gehäuses 20 vorgesehen sind. Der eine halbkreisförmige Halter 26 schließt mit dem halbkreisförmigen Gehäuse 20 genau ab und is mit diesem starr verbunden, während der andere halbkreisförmige Halter 28 im Bereich der Öffnung des Gehäuses 20 auf der dem Reflektor 22 ferneren Seite um eine Achse verschwenkbar ist, so daß die aus den Rohrkörpern 24 bestehende Schutzeinrichtung im Bereich der Gehäuseöffnung für einen Zugang zum Brenner weggeklappt werden kann, wie dies in Fig. 3 gezeigt ist.

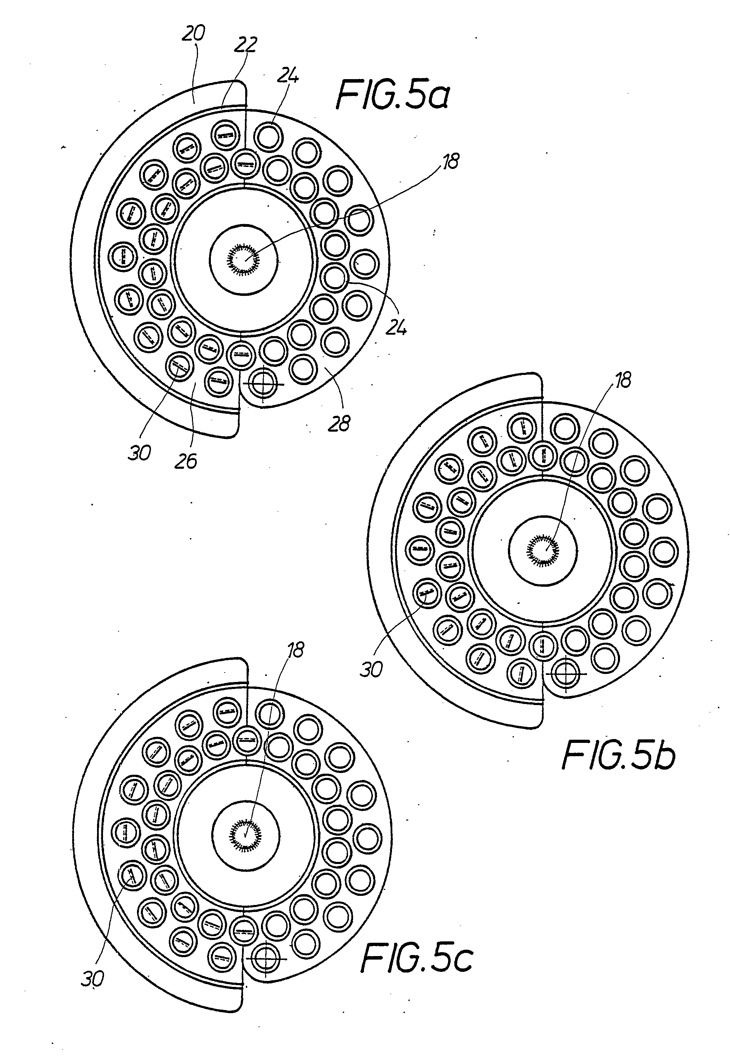

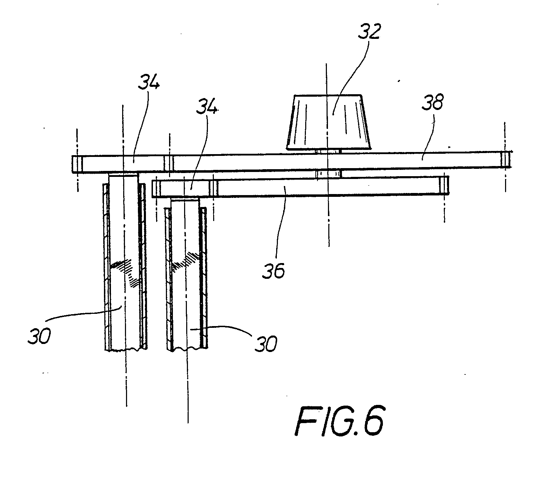

Nach den Fig. 5a bis 5c sind Lamellen in allen Rohrkörpern vorgesehen, die zwischen dem Reflektor 22 und dem Brenner 18 angeordnet sind. In den Fig. 5a bis 5c ist auch angedeutet, daß die Vorder- und die Rückseite der Lamellen 30 unterschiedliche Oberflächen aufweisen. Die Lamellen sind mit der in Fig. 6 veranschaulichten Einrichtung mittels eines Drehknopfes 32 um ihre mittlere Längsachse drehbar, so daß die drei in den Fig. 5a bis 5c gezeigten Stellungen eingenommen werden können. In den Fig. 5a und 5c ist die Ebene der Lamellen parallel zum Reflektor 22 ausgerichtet, während in der in Fig. 5b gezeigten Stellung die Ebene der Lamellen senkrecht zum Reflektor 22 ausgerichtet ist, so daß nur in dieser Stellung der Reflektor 22 wirksam wird, während in den Stellungen 5a und 5c die Oberflächenbeschaffenheit der Lamellen maßgebend ist, während der Reflektor 22 völlig unwirksam ist. Auf diese Weise kann das Licht der Filmleuchte beeinflußt werden. Bspw. kann das Licht mit geringerer Lichtausbeute weicher gemacht werden, wohingegen die Lichtausbeute vergrößert werden kann, wenn der Reflektor gemäß Fig. 5b voll wirksam wird und die Lamellen wirkungslos werden.

Gemäß Fig. 6 ist jeder Lamelle 30 ein Zahnrädchen 34 zugeordnet, wobei die Lamellen der inneren Reihe von einem gemeinsamen Zahnrad 36 angetrieben werden, während die Lamellen der äußeren Reihe von einem gemeinsamen Zahnrad 38 angetrieben werden und beide Zahnräder drehfest mit dem Drehknopf 32 verbunden sind.

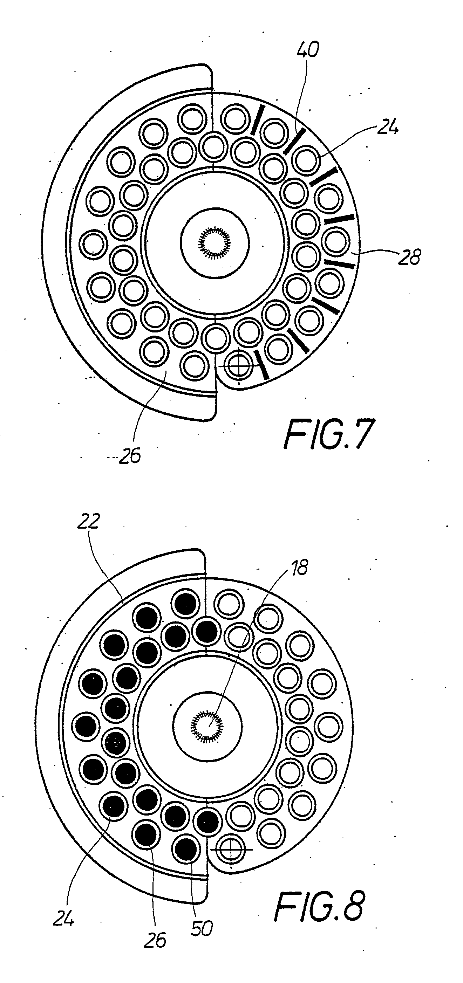

Nach Fig. 7 sind zwischen den Rohrkörpern der äußeren Reihe im Bereich der Gehäuseöffnung als weiterer Blendschutz radial zum Brenner ausgerichtete Lamellen 40 feststehend angeordnet. Sie haben ebenso wie eine Seite der Lamellen 30 eine weiße Farbe. Alternativ hierzu oder zusätzlich können auch Lamellen in Rohrkörpern 24 der äußeren Reihe feststehend angeordnet sein, wobei sie ebenfalls radial zum Brenner ausgerichtet sind, um den Blendschutz zu erhöhen. Die feststehende Anordnung innerhalb der Rohrkörper hat den Vorteil, daß sich die Lamellen bei Hitze nicht verbiegen, sie also durch die Rohrkörper in ihrer Form gehalten werden.

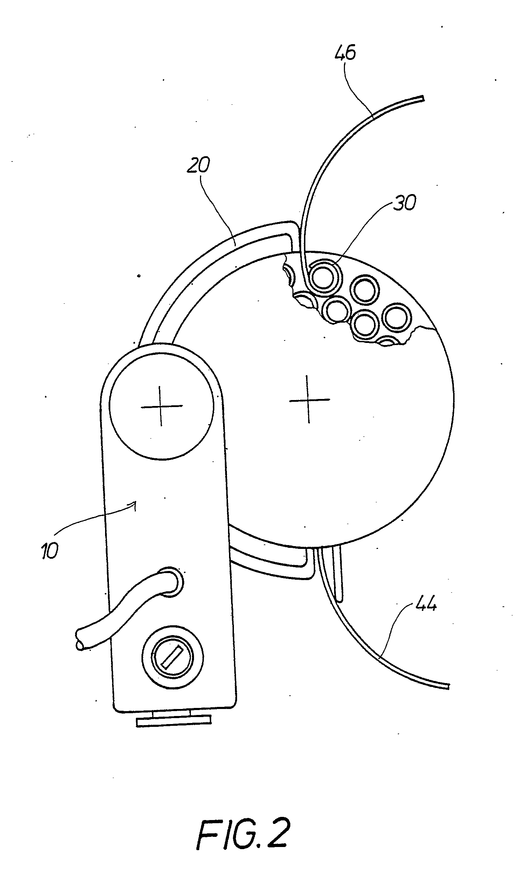

Aus Fig. 2 sind noch zwei halbkreisförmige Klappen 44 und 45 entnehmbar, die an Rohrkörpern der äußeren Reihe an den Längsrändern des Gehäuses 20 verschwenkbar angeordnet sind. Diese Rohrkörper bestehen im Gegensatz zu den anderen Rohrkörpern, welche aus Sicherheits- oder Panzerglas zum Schutz der Umgebung beim Explodieren eines Brenners hergestellt sind, aus Stahl. Die Klappen 44 und 46 schützen die Glaskörper, bspw. vor Verschmutzung, bei Nichtgebrauch, wenn sie die Gehäuseöffnung verschliessen, und schirmen im Betrieb das aus der Filmleuchte austretende Licht zur Rückseite hin ab.

Nach Fig. 8 sind die hohlen Glaskörper zwischen Reflektor 22 und Brenner 18 mit einem das Licht diffus reflektierenden Körper 50 gefüllt. Diese Ausführung kann anstelle der Lamellenausführung nach Fig. 5a und 5c verwendet werden.

Zwar ist in der vorangehenden Beschreibung der Begriff "Filmleuchte" gewählt worden, jedoch versteht es sich, daß diese Filmleuchte auch als Videoleuchte eingesetzt werden kann. Sie ist für Videoaufnahmen besonders geeignet, da sie bei Videoaufnahmen die Wiedergabe feinster Farb- und Helligkeitswerte aufgrund der Weichheit des abgegebenen Lichtes im Gegensatz zu den herkömmlichen Filmleuchten ermöglicht, die hartes und zu helles Licht abgeben. Herkömmliche Filmleuchten würden zur Folge haben, daß weiße abgerissene landkartenförmige Flächen aufgezeichnet würden, die keinerlei Zeichnung aufweisen. Außerdem ergibt sich bei den herkömmlichen Filmleuchten der Taschenlampeneffekt, so daß bei einer Kamerabewegung die Filmleuchte nachgeführt werden muß, während bei der erfindungsgemäßen Videoleuchte sich eine breite Raumausleuchtung ergibt.

Zwar ist es bei herkömmlichen Filmleuchten schon versucht worden, ein weiches Licht erzielen, indem die Streuscheibe vor dem Reflektor sandgestrahlt wurde. Abgesehen davon, daß durch dieses Vorgehen noch immer nicht ein hinreichend weiches Licht erzielt werden kann, hat das Sandstrahlen der Streuscheibe auch zur Folge, daß der Hitzestau in der Filmleuchte größer wird.

Auch die Verwendung großer Reflexionsschirme in Verbindung mit den herkömmlichen Filmleuchten stellt keine Lösung des Problems dar, da diese umständlich zu handhaben sind und aufgrund der hohen Reflexionsverluste leistungsstarke Filmleuchten erfordern.

Die erfindungsgemäße Film- bzw. Videoleuchte liefert nach dem heutigen Stand der Technik somit ein ideales Licht bei der Reproduktion und beste Flächenausleuchtung.

## Ansprüche

1. Filmleuchte mit einem Gehäuse (20), in dem ein Reflektor (22) angeordnet ist, der mit einem Brenner (18) zusammenwirkt, und das eine Öffnung für den Durchgang von Licht und Wärme aufweist, die zur Verhinderung von Verletzungen bei einer Brennerexplosion mit einer Schutzeinrichtung versehen ist, **dadurch gekennzeichnet,** daß die Schutzeinrichtung von mindestens zwei versetzt nebeneinander liegenden Reihen parallel zueinander angeordneter lichtdurchlässiger Rohrkörper (24) gebildet wird, die jeden vom Brenner ausgehenden Lichstrahl mindestens einmal ablenken.

2. Filmleuchte nach Anspruch 1, **dadurch gekennzeichnet,** daß die Achse der Rohrkörper (24) parallel zur Brennerachse verläuft.

3. Filmleuchte nach Anspruch 1 oder 2, **dadurch gekennzeichnet,** daß die Reihen lichtdurchlässiger Rohrkörper (24) auch zwischen Brenner (18) und Reflektor (22) vorgesehen sind.

4. Filmleuchte nach einem der Ansprüche 1 bis 3, **dadurch gekennzeichnet,** daß zumindest ein Teil der Rohrkörper hohl ist und daß zumindest in einem Teil der hohlen Rohrkörper je eine Lamelle (30) angeordnet ist.

Filmleuchte nach Anspruch 4, **dadurch gekennzeichnet,** daß in den hohlen Rohrkörpern (24), die sich zwischen Reflektor (22) und Brenner (18) befinden, die Lamellen (30) drehbar sind zwischen einer Stellung, in der ihre Ebene senkrecht zur Reflektoroberfläche ausgerichtet ist, und einer Stellung, in der ihre Ebene parallel zur Reflektoroberfläche ausgerichtet ist.

6. Filmleuchte nach Anspruch 5, **dadurch gekennzeichnet,** daß Vorder- und Rückseite der drehbaren Lamellen (30) unterschiedlich reflektierende Oberflächen aufweisen.

7. Filmleuchte nach Anspruch 4, **dadurch gekennzeichnet,** daß als weiterer Blendschutz radial zum Brenner (18) ausgerichtete Lamellen in hohlen Rohrkörpern, vorzugsweise der äußeren Reihe, im Bereich der Gehäuseöffnung feststehend angeordnet sind.

8. Filmleuchte nach einem der Ansprüche 1 bis 7, **dadurch gekennzeichnet,** daß als weiterer Blendschutz radial zum Brenner (18) ausgerichtete Lamellen (40) zwischen den Rohrkörpern (24), vorzugsweise der äußeren Reihe, im Bereich der Gehäuseöffnung feststehend angeordnet sind.

9. Filmleuchte nach einem der Ansprüche 1 bis 8, **dadurch gekennzeichnet,** daß die Rohrkörper (24) einen kreisförmigen Querschnitt aufweisen.

10. Filmleuchte nach einem der Ansprüche 1 bis 9, **dadurch gekennzeichnet,** daß die Rohrkörper (24) und der Reflektor (22) konzentrisch zum Brenner (28) angeordnet sind.

11. Filmleuchte nach einem der Ansprüche 1 bis 10, **dadurch gekennzeichnet,** daß sich die im Bereich der Gehäuseöffnung befindlichen Rohrkörper (24) um eine gemeinsame Schwenkachse am Gehäuse für einen Brennerwechsel vom Brnner (18) wegklappen lassen.

12. Filmleuchte nach einem der Ansprüche 3 und 7 bis 11, **dadurch gekennzeichnet,** daß die zwischen Brenner und Reflektor befindlichen Rohrkörper mit einem das Licht diffus reflektierenden Material gefüllt sind.

13. Filmleuchte nach einem der vorhergehenden Ansprüche, **dadurch gekennzeichnet,** daß die Rohrkörper aus Sicherheitsglas bestehen.

FIG.1

FIG.2

28

20

10

FIG.3

32

16

12    10

FIG.4

FIG.5a

FIG.5b

FIG.5c

FIG.6

FIG.7

FIG.8

Europäisches Patentamt

**EUROPÄISCHER RECHERCHENBERICHT**

Nummer der Anmeldung

EP 87 11 8098

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-2 933 595 (TABOURET) * Spalte 3, Zeilen 29-57 * | 1 | F 21 V 25/00 G 03 B 15/03 |
| A | | 4,7-9 | |
| Y | DE-A-2 718 222 (LOHSE) * Anspruch 1 * | 1 | |
| A | | 10,13 | |
| A | GB-A- 402 648 (FRASER) * Figuren 1-3 * | 2,9 | |
| A | US-A-3 348 039 (SCHRAGE) * Figuren 1-5 * | 3 | |
| A | GB-A- 561 986 (EMBERSON) * Seite 1, Zeilen 76-84 * | 3,12 | |
| A | DE-C- 844 495 (WILDEN) * Figur 1 * | 11 | |

**RECHERCHIERTE SACHGEBIETE (Int. Cl.4)**

F 21 V
G 03 B
F 21 P
F 21 M
F 21 L

Der vorliegende Recherchenbericht wurde für alle Patentansprüche erstellt

| Recherchenort | Abschlußdatum der Recherche | Prüfer |
|---|---|---|
| DEN HAAG | 04-08-1988 | FOUCRAY R.B.F. |